# EUROPÄISCHE PATENTANMELDUNG

(11) **EP 1 243 930 A1**
(43) Veröffentlichungstag der Anmeldung: **25.09.2002**
(21) Anmeldenummer: 02004800.5
(22) Anmeldetag: 02.03.2002
(51) Int. Cl.: G01P 15/125, G01P 15/00

(54) **Mikromechanischer kapazitiver Beschleunigungssensor**

(30) Priorität: 08.03.2001 DE 10111149; 09.04.2001 DE 10117630
(71) Anmelder: EADS Deutschland GmbH, 81663 München (DE); Conti Temic Microelectronic GmbH, 90411 Nürnberg (DE)
(72) Erfinder: Kapser, Konrad, Dr., 81379 München (DE); Knittl, Peter, 93309 Kelheim (DE); Prechtel, Ulrich, 81735 München (DE); Seidel, Helmut, Dr., 82319 Starnberg (DE); Tölg, Sebastian, Dr., 65396 Walluf (DE); Weinacht, Manfred, 73265 Dettingen (DE)

(57) **Zusammenfassung**

Es wird ein mikromechanischer kapazitiver Beschleunigungssensor zur Erfassung der Beschleunigung eines Objekts in mindestens einer Richtung beschrieben, der eine Rahmenanordnung (110), eine aus einem Wafer gefertigte und relativ zu der Rahmenanordnung (110) um eine Drehachse beweglich gelagerte träge Sensormasse (101) und eine kapazitiven Erfassungseinrichtung (120) zur Erzeugung mindestens eines die Lage der Sensormasse (101) relativ zu der Rahmenanordnung (110) repräsentierenden kapazitiven Ausgangssignals umfasst. Die träge Sensormasse (101) hat einen Schwerpunkt, der gegenüber der Drehachse in einer Richtung senkrecht zur Waferebene versetzt angeordnet ist, um Beschleunigungen lateral zur Waferoberfläche zu messen. Die Sensormasse (101) und die Rahmenanordnung (110) sind monolithisch aus einem einzigen einkristallinen Silizium-Wafer gefertigt. Ein Deckelteil (112) bildet eine gemeinsame Anschlussebene(150) zum Anschluss von Kondensatorelektroden (125, 126). Tordierbare Elemente (105) bilden eine elektrisch leitende Lagervorrichtung für die Sensormasse (101).

## Beschreibung

Die Erfindung betrifft einen mikromechanischen kapazitiven Beschleunigungssensor nach dem Oberbegriff des Patentanspruchs1 und dem Oberbegriff des Patentanspruchs 17.

Zur Erfassung der Beschleunigung eines Objekts in einer oder mehreren Richtungen sind mikromechanische, aus einem Wafer gefertigte kapazitive Beschleunigungssensoren bekannt, mit einer Halterung, die z.B. eine Rahmenanordnung ist, welche bezüglich dem Objekt ortsfest ist, mit einer trägen Sensormasse, welche relativ zu der Halterung bzw. Rahmenanordnung des Beschleunigungssensors beweglich ist, mit einer Lagervorrichtung, durch welche die Sensormasse bezüglich der Halterung um eine Ausgangslage elastisch gelagert ist, und mit einer kapazitiven Erfassungseinrichtung zur Erzeugung mindestens eines die Lage der Sensormasse relativ zu der Halterung bzw. Rahmenanordnung repräsentierenden kapazitiven Ausgangssignals. Die kapazitive Erfassungseinrichtung umfasst z.B. an der Sensormasse vorgesehene erste Kondensatorelektroden und an der Halterung den ersten Kondensatorelektroden gegenüberliegend vorgesehene zweite Kondensatorelektroden.

Zur Kopplung der an der Sensormasse vorgesehenen ersten Kondensatorelektroden mit an der Rahmenanordnung vorgesehenen ersten Anschlusselementen ist z.B. eine Kopplungsanordnung vorgesehen, und die zweiten Kondensatorelektroden sind mit zweiten Anschlusselementen gekoppelt.

Mikromechanische kapazitive Beschleunigungssensoren dieser oder ähnlicher Art sind aus der DE 38 37 883 A1, DE 196 37 265 A1, DE 41 26 100 A1, DE 197 09 520 A1 und DE 197 09 731 A1 bekannt.

Aufgabe der Erfindung ist es, einen mikromechanischen kapazitiven Beschleunigungssensor zu schaffen, welcher möglichst einfach und damit kostengünstig herstellbar ist, eine geringe Größe aufweist und eine möglichst geringe Empfindlichkeit gegen Störeinflüsse hat.

Diese Aufgabe wird durch die in den Patentansprüchen 1 und 17 angegebenen mikromechanischen kapazitiven Beschleunigungssensoren gelöst.

Vorteilhafte Weiterbildungen des Erfindungsgegenstands sind in den Unteransprüchen gekennzeichnet.

Gemäß einem ersten Aspekt der Erfindung wird ein mikromechanischer kapazitiver Beschleunigungssensor zur Erfassung der Beschleunigung eines Objekts in mindestens einer Richtung geschaffen, mit einer Rahmenanordnung, einer trägen Sensormasse, die aus einem Wafer gefertigt ist und relativ zu der Rahmenanordnung um eine Drehachse beweglich gelagert ist,und mit einer kapazitiven Erfassungseinrichtung zur Erzeugung mindestens eines die Lage der Sensormasse relativ zu der Rahmenanordnung repräsentierenden kapazitiven Ausgangssignals, wobei die träge Sensormasse einen Schwerpunkt hat, der gegenüber der Drehachse in einer Richtung senkrecht zur Waferebene versetzt angeordnet ist.

Ein wesentlicher Vorteil dieses erfindungsgemäßen Beschleunigungssensors ist, dass dieser besonders einfach herstellbar ist und eine große Empfindlichkeit bei kompakter Bauweise hat. Der Beschleunigungssensor hat eine geringe Empfindlichkeit gegen Störeinflüsse. Mit dem Beschleunigungssensor lassen sich Beschleunigungen parallel zur Waferoberfläche messen. Mit ihm können auch 2- oder 3-achsige Beschleunigungssensoren bzw. Sensorsysteme geschaffen werden, die z.B. monolithisch herstellbar sind.

Beispielsweise ist die Sensormasse und/oder die Rahmenanordnung monolithisch aus einem einzigen einkristallinen Silizium-Wafer gefertigt. Dadurch ergibt sich eine besonders kostengünstige Herstellung bei äußerst kompakter Bauweise und hoher Meßgenauigkeit.

Der Beschleunigungssensor hat zum Beispiel eine Lagervorrichtung zur Lagerung der trägen Sensormasse, die insbesondere tordierbare, z.B. aus Silizium gefertigte Elemente umfasst. Auch durch diese Maßnahme wird die einfache und kostengünstige Herstellung bei kleiner Bauweise noch zusätzlich gefördert.

Die Lagervorrichtung bildet bevorzugt eine elektrisch leitende Verbindung zwischen der Sensormasse und einer an der Rahmenanordnung vorgesehenen elektrischen Kontaktierung. Damit wird erreicht, dass die Kontaktierung der beweglichen Sensormasse an der Rahmenanordnung erfolgt, wobei die elektrische Verbindung zur Sensormasse auf besonders einfache und zuverlässige Weise hergestellt ist.

Bevorzugt ist die Lagervorrichtung an der Sensormasse nahe der Waferoberfläche angeordnet. Dadurch ergibt sich z.B. eine besonders große Meßempfindlichkeit.

Die Sensormasse kann beispielsweise kubisch oder in Form eines Quaders oder Kegelstumpfes oder in Form einer stumpfen Pyramide ausgestaltet sein. Durch diese Geometrien ergeben sich noch zusätzlich große Meßempfindlichkeiten bei geringem Platzbedarf und kostengünstiger Herstellung.

Vorzugsweise sind mehrere träge Sensormassen vorgesehen, die um jeweils um eine Drehachse beweglich gelagert sind um Beschleunigungen in mehreren zueinander senkrecht gerichteten Richtungen zu messen, wobei ein oder mehrere Sensormassen jeweils einen Schwerpunkt haben, der gegenüber der zugehörigen Drehachse in einer Richtung senkrecht zur Waferebene versetzt angeordnet ist. Damit wird ein Sensorsystem geschaffen, dass trotz geringer Baugröße und kostengünstiger Herstellung zwei- oder dreiachsige Messungen bzw. genaue Beschleunigungsmessungen in mehreren Raumrichtungen ermöglicht.

Bevorzugt ist der Schwerpunkt der Sensormasse relativ zur zugehörigen Drehachse zusätzlich lateral in Richtung der Waferebene versetzt angeordnet. Durch die zusätzliche laterale Versetzung des Schwerpunkts ergibt sich eine Messempfindlichkeit in einer weiteren Raumrichtung.

Der Beschleunigungssensor hat vorzugsweise an der Sensormasse vorgesehene erste Kondensatorelektroden und diesen gegenüberliegend an der Rahmenanordnung vorgesehene zweite Kondensatorelektroden, wobei zum Beispiel erste Anschlusselemente zum elektrischen Anschluß der ersten Kondensatorelektroden und/oder zweite Anschlusselemente zum elektrischen Anschluß der zweiten Kondensatorelektroden bevorzugt in einer gemeinsamen Anschlussebene angeordnet sind.

Die Kontaktierung der ersten Anschlusselemente und/oder der zweiten Anschlusselemente kann von einer einzigen Seite erfolgen. Auch kann die elektrische Kontaktierung der kapazitiven Erfassungseinrichtung von einer einzigen Seite erfolgen.

Bevorzugt sind an der Rahmenanordnung vorgesehene zweite Kondensatorelektroden zusammen mit den ersten und zweiten Anschlusselementen in der gemeinsamen Anschlussebene angeordnet sind.

Durch jede dieser Maßnahmen ergibt sich eine besonders günstige Möglichkeit zur Kontaktierung, was die Herstellung vereinfacht und Kosten zusätzlich senkt.

Vorzugsweise hat der Beschleunigungssensor eine Kopplungsanordnung zur Kopplung von an der Sensormasse vorgesehenen ersten Kondensatorelektroden mit an der Rahmenanordnung vorgesehenen ersten Anschlusselementen, wobei die Kopplungsanordnung beispielsweise eine galvanische oder kapazitive Verbindung zur Überbrückung einer Höhenversetzung zwischen den ersten Kondensatorelektroden und einer gemeinsamen Anschlussebene umfasst. Dadurch können z.B. sämtliche Anschlusselemente auf einer Ebene liegen.

Bevorzugt enthält die Rahmenanordnung ein die Sensormasse seitlich umgebendes Mittelteil und ein z.B. höhenversetzt zu der Sensormasse an dem Mittelteil angeordnetes erstes Deckelteil, wobei insbesondere an dem ersten Deckelteil auf seiner der Sensormasse zugewandten Seite zweite Kondensatorelektroden vorgesehen sind.

Beispielsweise bildet die der Sensormasse zugewandte Seite des ersten Deckelteils eine gemeinsame Anschlussebene zum elektrischen Anschluss der kapazitiven Erfassungseinrichtung.

Vorzugsweise sind die zweiten Kondensatorelektroden entweder durch eine Metallisierung auf der Sensormasse oder durch die auf einem elektrischen Potential befindliche Sensormasse selbst gebildet.

Gemäß einem zweiten Aspekt der Erfindung hat der Beschleunigungssensor eine Rahmenanordnung, welche bezüglich dem Objekt ortsfest ist, eine träge Sensormasse, welche relativ zu der Rahmenanordnung des Beschleunigungssensors beweglich ist, eine Lagervorrichtung, durch welche die Sensormasse bezüglich der Rahmenanordnung um eine Ausgangslage elastisch gelagert ist, und eine kapazitive Erfassungseinrichtung zur Erzeugung mindestens eines die Lage der Sensormasse relativ zu der Rahmenanordnung repräsentierenden kapazitiven Ausgangssignals, welche an der Sensormasse vorgesehene erste Kondensatorelektroden und an der Rahmenanordnung den ersten Kondensatorelektroden gegenüberliegend vorgesehene zweite Kondensatorelektroden umfasst, eine Kopplungsanordnung zur Kopplung der an der Sensormasse vorgesehenen ersten Kondensatorelektroden mit an der Rahmenanordnung vorgesehenen ersten Anschlusselementen, und zweite Anschlusselementen, mit welchen die zweiten Kondensatorelektroden gekoppelt sind.. Insbesondere ist es vorgesehen, dass die ersten Anschlusselemente und/oder die zweiten Anschlusselemente in einer gemeinsamen Anschlussebene angeordnet sind, welche beispielsweise gegen die an der Sensormasse vorgesehenen ersten Kondensatorelektroden oder/und gegen die an der Rahmenanordnung vorgesehenen zweiten Kondensatorelektroden höhenversetzt ist, und dass die Kopplungsanordnung insbesondere Mittel zur Überbrückung der Höhenversetzung zwischen den ersten Kondensatorelektroden oder/und den zweiten Kondensatorelektroden und der gemeinsamen Anschlussebene enthält.

Auch bei dem mikromechanischen kapazitiven Beschleunigungssensor gemäß diesem Aspekt der Erfindung liegt ein wesentlicher Vorteil darin, dass er besonders einfach herstellbar ist.

Dies wird insbesondere dadurch erreicht, dass alle elektrischen Anschlüsse in Form der Anschlusselemente für die ersten und zweiten Kondensatorelektroden auf einer Ebene liegen.

Gemäß einer bevorzugten Ausführungsform des erfindungsgemäßen Beschleunigungssensors ist es vorgesehen, dass die an der Rahmenanordnung vorgesehenen zweiten Kondensatorelektroden zusammen mit den ersten und zweiten Anschlusselementen in der gemeinsamen Anschlussebene angeordnet sind, und dass die Kopplungsanordnung Mittel zur Überbrückung der Höhenversetzung zu der gemeinsamen Anschlussebene enthält. Diese Ausführungsform ist besonders vorteilhaft, da die Anordnung der ersten und zweiten Anschlusselemente zusammen mit den zweiten Kondensatorelektroden in einer gemeinsamen Ebene die Herstellung besonders vereinfacht.

Gemäß einem weiteren Aspekt der Erfindung ist es vorgesehen, dass die Kopplungsanordnung eine die Höhenversetzung zu der gemeinsamen Anschlussebene überbrückende galvanische Verbindung bildet.

Gemäß einem noch anderen Aspekt der Erfindung ist es vorgesehen, dass die Kopplungsanordnung eine die Höhenversetzung zu der gemeinsamen Anschlussebene überbrückende kapazitive Verbindung bildet.

Gemäß einer besonders bevorzugten Ausführungsform der Erfindung ist es vorgesehen, dass die Rahmenanordnung eine die Sensormasse seitlich umgebendes Mittelteil und ein höhenversetzt zu der Sensormasse an dem Mittelteil angeordnetes erstes Deckelteil enthält, wobei die zweiten Kondensatorelektroden auf der der Sensormasse zugewandten Seite an dem ersten Deckelteil vorgesehen sind und die ersten Kondensatorelektroden den zweiten Kondensatorelektroden gegenüberliegend an der Sensormasse vorgesehen sind. Der Vorteil dieser Art der Anordnung liegt in einer einfachen Kontaktierung und in geringen Streukapazitäten.

Eine vorteilhafte Weiterbildung der letztgenannten Ausführungsform sieht es vor, dass die gemeinsame Anschlussebene, in welcher die ersten Anschlusselemente und die zweiten Anschlusselemente angeordnet sind, durch die der Sensormasse zugewandten Seite des ersten Deckelteils gebildet ist, in welcher auch die zweiten Kondensatorelektroden vorgesehen sind.

Eine bevorzugte Ausführungsform hiervon sieht es vor, dass die ersten Anschlusselemente, die zweiten Anschlusselemente sowie die zweiten Kondensatorelektroden, die mit letzteren verbunden sind, aus einer einzigen auf der der Sensormasse zugewandten Seite des ersten Deckelteils ausgebildeten leitenden Schicht hergestellt sind.

Bei Ausführungsformen, bei denen die Kopplungsanordnung eine kapazitive Verbindung enthält, ist es vorteilhafterweise vorgesehen, dass auf der der Sensormasse zugewandten Seite des ersten Deckelteils eine zweite Kopplungselektrode ausgebildet ist, und dass an der Sensormasse eine der zweiten Kopplungselektrode gegenüberliegende erste Kopplungselektrode vorgesehen ist, wobei die erste und die zweite Kopplungselektrode eine kapazitive Verbindung der Kopplungsanordnung zur Kopplung der an der Sensormasse vorgesehenen ersten Kondensatorelektroden mit einem an der Rahmenanordnung vorgesehenen ersten Anschlusselement bilden.

Diese Ausführungsform ist vorteilhafterweise so weitergebildet, dass die zweite Kopplungselektrode zusammen mit dem ersten Anschlusselement in der gemeinsamen Anschlussebene vorgesehen sind, welche durch die der Sensormasse zugewandte Seite des ersten Deckelteils gebildet ist.

Weiterhin ist es vorzugsweise vorgesehen, dass die zweite Kopplungselektrode und das damit verbundene erste Anschlusselement zusammen mit den zweiten Kondensatorelektroden und den damit verbundenen zweiten Anschlusselementen aus einer einzigen auf der der Sensormasse zugewandten Seite des ersten Deckelteils ausgebildeten leitenden Schicht hergestellt sind.

Bei den Ausführungsbeispielen, bei den die Rahmenanordnung ein die Sensormasse seitlich umgebendes Mittelteil und ein höhenversetzt dazu an dem Mittelteil angeordnetes erstes Deckelteil enthält, ist es vorzugsweise vorgesehen, dass ein höhenversetzt zu der Sensormasse an dem Mittelteil dem ersten Deckelteil gegenüberliegend angeordnetes zweites Deckelteil enthält, welches zusammen mit dem Mittelteil und dem ersten Deckelteil ein die Sensormasse zusammen mit den ersten Kondensatorelektroden und den zweiten Kondensatorelektroden hermetisch einschließendes Gehäuse bildet. Das den Beschleunigungssensor hermetisch einschließende Gehäuse bietet zum einen einen zuverlässigen Schutz gegen Umgebungseinflüsse und ermöglicht es zum anderen, im Inneren desselben einen geringeren Gasdruck zur Senkung der Dämpfung einzustellen.

Gemäß einer Art der Ausführung des erfindungsgemäßen Beschleunigungssensors ist es vorgesehen, dass die Lagervorrichtung durch Torsionselemente gebildet ist, an welchen die Sensormasse bezüglich der Rahmenanordnung um die besagte Ausgangslage drehelastisch gelagert ist.

Eine bevorzugte Ausführungsform hiervon sieht es vor, dass zwei auf einer gemeinsamen Drehachse befindliche, an einander gegenüberliegenden Seiten der Sensormasse angreifende, die Lagervorrichtung bildende Torsionselemente vorgesehen sind, wobei die Sensormasse nur bezüglich einer einzigen Richtung relativ zu der Rahmenanordnung beweglich ist.

Eine bevorzugte Ausführungsform des erfindungsgemäßen Beschleunigungssensors sieht es vor, dass die Torsionselemente an der Sensormasse einerseits und an dem Mittelteil der Rahmenanordnung andererseits festgelegt sind.

Gemäß einem Aspekt der Erfindung ist es vorgesehen, dass die Kopplungsanordnung durch eine galvanische Verbindung gebildet ist, welche die Torsionselemente enthält.

Gemäß einer anderen Art der Ausführung des erfindungsgemäßen Beschleunigungssensors ist es vorgesehen, dass die Lagervorrichtung durch ein oder mehrere Biegeelemente gebildet ist, an welchen die Sensormasse bezüglich der Rahmenanordnung um die besagte Ausgangslage biegeelastisch gelagert ist.

Eine bevorzugte Ausführungsform hiervon sieht es vor, dass zwei in einer gemeinsamen Ebene befindliche, voneinander beabstandet an der Sensormasse festgelegte Biegeelemente vorgesehen sind, wobei die Sensormasse nur bezüglich einer einzigen Richtung relativ zu der Rahmenanordnung beweglich ist.

Gemäß einer Ausführungsform ist es vorgesehen, dass die Biegeelemente an der Sensormasse einerseits und an dem ersten Deckelteil der Rahmenanordnung andererseits festgelegt sind.

Gemäß einem Aspekt der Erfindung ist es vorgesehen, dass die Kopplungsanordnung durch eine galvanische Verbindung gebildet ist, welche die Biegeelemente enthält.

Eine weitere Art der Ausführung des erfindungsgemäßen Beschleunigungssensors sieht es vor, dass ein einziges Biegeelement vorgesehen ist, welches zentral an der Sensormasse festgelegt ist, wobei die Sensormasse bezüglich zweier verschiedener Richtungen relativ zu der Rahmenanordnung beweglich ist, und dass die Erfassungseinrichtung zur Erzeugung zweier die Lage der Sensormasse relativ zu der Rahmenanordnung repräsentierender kapazitiver Ausgangssignale vorgesehen ist. Der Vorteil dieser Art der Ausführung ist es, dass mit einer einzigen Sensormasse Beschleunigungen in zwei verschiedenen Richtungen, beispielsweise den beiden Richtungen der Horizontalebene erfasst werden können.

Gemäß einer bevorzugten Ausführungsform hiervon ist es vorgesehen, dass die Erfassungseinrichtung vier erste Kondensatorelektroden, welche paarweise einander gegenüberliegend auf entgegengesetzten Seiten des Biegeelements an der Sensormasse vorgesehen sind, und vier zwei Kondensatorelektroden, welche paarweise einander gegenüberliegend auf entgegengesetzten Zeiten des Biegeelements gegenüber den ersten Kondensatorelektroden an dem ersten Deckelteil der Rahmenanordnung vorgesehen sind, umfasst.

Wenn bei den letztgenannten Ausführungsformen durch die Kopplungsanordnung eine kapazitive Verbindung gebildet werden soll, ist es insbesondere vorteilhaft vorzusehen, dass die Kopplungsanordnung eine das Biegeelement umgebende erste Kopplungselektrode, welche an der Sensormasse vorgesehen ist, und ein das Biegeelement umgebende, der ersten Kopplungselektrode gegenüberliegende zweite Kopplungselektrode umfasst, welche an dem ersten Deckelteil der Rahmenanordnung vorgesehen ist.

Bei den Ausführungsformen, bei denen die Kopplungsanordnung eine galvanische Verbindung bildet, ist es vorteilhaft vorzusehen, dass die Kopplungsanordnung durch eine galvanische Verbindung gebildet ist, welche das Biegeelement umfasst.

Gemäß einer weiteren Art der Ausführung des erfindungsgemäßen Beschleunigungssensors ist es vorgesehen, dass zur Erfassung der Beschleunigung eines Objekts in mehreren Richtungen mehrere mit jeweils einer kapazitiven Erfassungseinrichtung versehene Sensormassen vorgesehen sind, die unabhängig voneinander jeweils mittels einer Lagervorrichtung in einer Rahmenanordnung gelagert und jeweils mit einer kapazitiven Erfassungseinrichtung zur Erzeugung eines die Lage der jeweiligen Sensormasse relativ zu der Rahmenanordnung repräsentierenden Ausgangssignals versehen sind.

Hierbei ist es vorteilhafterweise vorgesehen, dass die Sensormassen in einer gemeinsamen Ebene in der Rahmenanordnung gelagert sind und dass die ersten und zweiten Anschlusselemente aller Sensormassen in einer gemeinsamen Anschlussebene vorgesehen sind.

Gemäß einer Ausführungsform des erfindungsgemäßen Beschleunigungssensors ist es vorgesehen, dass eine Sensormasse zur Erfassung der Beschleunigung des Objekts in einer horizontalen Richtung vorgesehen ist, welche eine in der Höhe nach oben gegenüber dem Massenschwerpunkt versetzte Lagervorrichtung aufweist, wobei die Sensormasse bei Beschleunigung des Objekts eine Drehbewegung um eine durch die Lagervorrichtung definierte Drehachse ausführt.

Gemäß einer anderen Ausführungsform des erfindungsgemäßen Beschleunigungssensors ist es vorgesehen, dass eine Sensormasse zur Erfassung der Beschleunigung des Objekts in einer vertikalen Richtung vorgesehen ist, welche eine seitlich zum Massenschwerpunkt versetzte Lagervorrichtung aufweist, wobei die Sensormasse bei Beschleunigung des Objekts eine Drehbewegung um eine durch die Lagervorrichtung definierte Drehachse ausführt.

Hierbei ist es insbesondere vorteilhaft vorzusehen, dass die ersten Kondensatorelektroden paarweise jeweils auf entgegengesetzten Seiten der durch die Lagervorrichtung definierten Drehachse auf der Sensormasse vorgesehen sind, und dass die zweiten Kondensatorelektroden ebenfalls paarweise jeweils den ersten Kondensatorelektroden gegenüberliegend an der Rahmenanordnung vorgesehen sind, und dass zur Erzeugung des kapazitiven Ausgangssignals der Erfassungseinrichtung die Differenzkapazität der paarweisen Kondensatorelektroden verwendet wird. Die Erfassung der Differenzkapazität zur Erzeugung des Ausgangssignals ist insbesondere von Vorteil, um Störeinflüsse zu vermindern.

Vorzugsweise ist es vorgesehen, dass die auf der Sensormasse vorgesehenen ersten Kondensatorelektroden durch ein leitfähiges Material gebildet sind, aus welchem die Sensormasse hergestellt ist.

Bei den Ausführungsformen, bei denen die Rahmenanordnung ein die Sensormasse seitlich umgebendes Mittelteil und ein daran angeordnetes erstes Deckelteil enthält, ist es vorteilhaft, wenn das erste Deckelteil der Rahmenanordnung aus einem alkalimetallhaltigen Glas hergestellt ist.

Ebenso ist es vorteilhaft vorzusehen, dass das zweite Deckelteil der Rahmenanordnung aus einem alkalimetallhaltigen Glas hergestellt ist.

Schließlich ist ein Verfahren zur Herstellung eines Beschleunigungssensors nach einer der vorgenannten Ausführungsformen vorgesehen, wobei jede der Sensormassen zunächst mit einer eigenen als Einzelsensor angefertigt wird und dass die Einzelsensoren dann zu einem Gesamtsensor zusammengefügt werden.

Im folgenden werden Ausführungsbeispiele der Erfindung anhand der Zeichnung erläutert.

Es zeigen:
- Fig. 1a: eine perspektivische, teilweise geschnittene Ansicht eines mikromechanischen kapazitiven Beschleunigungssensors zur Erfassung der Beschleunigung eines Objekts in einer Richtung (x) gemäß einem ersten Ausführungsbeispiel der Erfindung;
- Fig. 1b: ein elektrisches Ersatzschaltbild des kapazitiven Beschleunigungssensors gemäß Fig. 1a;
- Fig. 2: eine Querschnittsansicht eines mikromechanischen kapazitiven Beschleunigungssensors gemäß dem in Fig. 1a gezeigten ersten Ausführungsbeispiel;
- Fig. 3: die perspektivischen Ansichten von drei Sensormassen eines mikromechanischen kapazitiven Beschleunigungssensors zur Erfassung der Beschleunigung eines Objekts in drei Richtungen (x, y, z) in Erweiterung des in Fig. 1 dargestellten ersten Ausführungsbeispiels der Erfindung;
- Fig. 4a: eine perspektivische, teilweise geschnittene Ansicht eines mikromechanischen kapazitiven Beschleunigungssensors zur Erfassung der Beschleunigung eines Objekts in einer Richtung (x) gemäß einem zweiten Ausführungsbeispiel der Erfindung;
- Fig. 4b: ein elektrisches Ersatzschaltbild des kapazitiven Beschleunigungssensors von Fig. 4 gemäß einer Variante mit kapazitiver Kopplung;
- Fig. 4c: ein elektrisches Ersatzschaltbild des kapazitiven Beschleunigungssensors von Fig. 4a gemäß einer Variante mit galvanischer Kopplung;
- Fig. 5: eine Querschnittsansicht des mikromechanischen kapazitiven Beschleunigungssensors gemäß dem Ausführungsbeispiel von Fig. 4a;
- Fig.6: eine Querschnittsansicht eines mikromechanischen kapazitiven Beschleunigungssensors gemäß einem dritten Ausführungsbeispiel der Erfindung;
- Fig. 7: eine perspektivische Ansicht einer Sensormasse eines mikromechanischen kapazitiven Beschleunigungssensors zur Erfassung der Beschleunigung eines Objekts in zwei Richtungen (x, y), gemäß einem vierten und einem fünften Ausführungsbeispiel der Erfindung;
- Fig. 8a, b: jeweils Draufsichten aus Anordnungen von Kondensator- und Anschlusselementen eines mikromechanischen kapazitiven Beschleunigungssensors zur Erfassung der Beschleunigung eines Objekts in zwei Richtungen (x, y) gemäß dem vierten und fünften Ausführungsbeispiel der Erfindung.

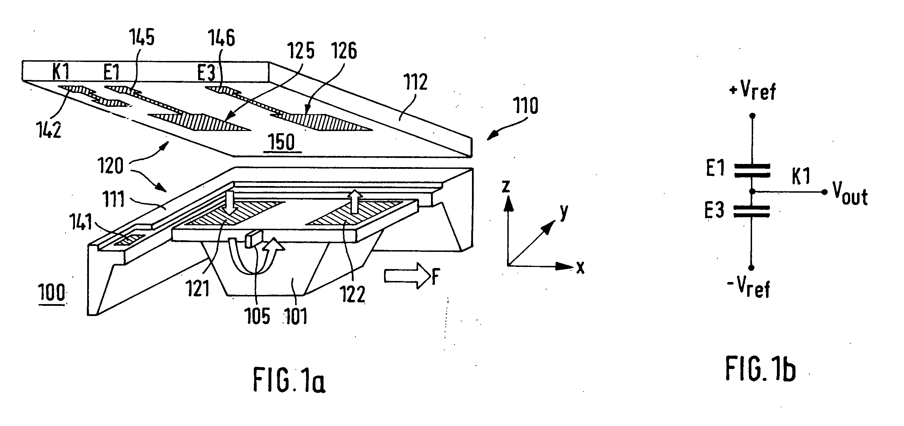

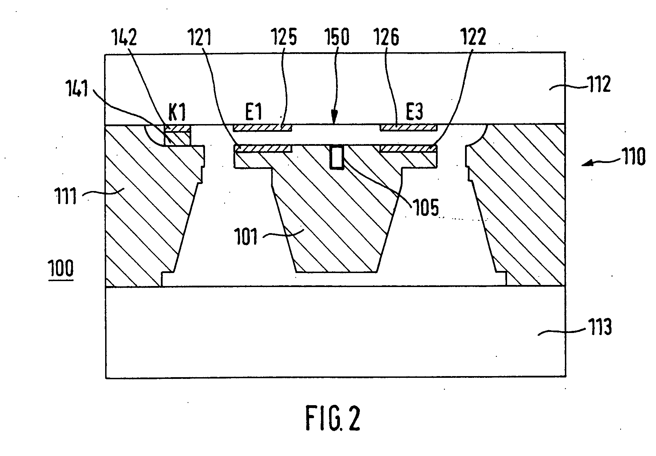

In Fig. 1a und 2 ist ein erstes Ausführungsbeispiel eines mikromechanischen kapazitiven Beschleunigungssensors zur Erfassung der Beschleunigung eines Objekts in einer Richtung, nämlich der Richtung x, insgesamt mit dem Bezugszeichen 100 bezeichnet. Der Beschleunigungssensor 100 umfasst eine Rahmenanordnung 110, welche aus einem Mittelteil 111, einem ersten Deckelteil 112 und einem zweiten Deckelteil 113 besteht, wobei letzteres nur in Fig. 2 gezeigt ist. Die Rahmenanordnung 110 ist bezüglich dem Objekt, dessen Beschleunigung erfasst werden soll, ortsfest angeordnet. Der Beschleunigungssensor 100 enthält eine träge Sensormasse 101, welche relativ zu der Rahmenanordnung 110 des Beschleunigungssensors 100 beweglich ist und die mittels einer Lagervorrichtung 105 bezüglich der Rahmenanordnung 110 um eine Ausgangslage elastisch gelagert ist.

Die träge Sensormasse 101 hat in der hier gezeigten bevorzugten Ausführungsform einen Schwerpunkt, der gegenüber der Drehachse der Sensormasse 101 in einer senkrecht zur Waferebene gerichteten Richtung versetzt angeordnet ist.

D.h., der Schwerpunkt der Sensormasse 101 ist in diesem Beispiel in bezug auf die Drehachse ausgelagert, wobei die Drehachse in der Nähe der Oberfläche des Wafers bzw. der Sensormasse 101 liegt und der Schwerpunkt bei horizontal ausgerichteter Waferoberfläche unterhalb der Drehachse liegt. Somit kann eine parallel zur Waferoberfläche gerichtete Beschleunigung F gemessen werden, die eine Auslenkung der trägen Sensormasse 101 um die Drehachse bewirkt.

Das Mittelteil 111 der Rahmenanordnung 110 umgibt die Sensormasse 101 seitlich und das erste Deckelteil 112 ist höhenversetzt zu der Sensormasse 101 an dem Mittelteil 111 angeordnet.

Die Lagervorrichtung 105 ist bei dem in den Fig. 1a und 2 dargestellten Ausführungsbeispiel durch Torsionselemente gebildet, an welchen die Sensormasse 101 bezüglich der Rahmenanordnung 110, d.h. bezüglich dessen Mittelteil 111 um die besagte Ausgangslage drehelastisch gelagert ist. Die die Lagervorrichtung 105 bildenden Torsionselemente sind auf einer gemeinsamen Drehachse befindlich an einander gegenüberliegenden Seiten der Sensormasse 110 vorgesehen und die Sensormasse 101 ist damit nur bezüglich einer einzigen Richtung, nämlich der in Fig. 1a mit x bezeichneten Koordinatenrichtung relativ zu der Rahmenanordnung 110 beweglich. Die Sensormasse 101 bewegt sich beim Auftreten einer Beschleunigungskraft Fx in Richtung der x-Achse um diese Drehachse, wobei die Auslenkung am Rand der Sensormasse 101 nach oben und unten gerichtet ist. Die Torsionselemente 105 sind einerseits an dem Mittelteil 111 der Rahmenanordnung 110 und andererseits an der Sensormasse 101 drehstabil festgelegt.

Weiterhin umfasst der Beschleunigungssensor 100 eine kapazitive Erfassungseinrichtung 120 zur Erzeugung eines kapazitiven Ausgangssignals, welches die Lage der Sensormasse 101 relativ zu der Rahmenanordnung 110 repräsentiert und welche an der Sensormasse 101 vorgesehene erste Kondensatorelektroden 121,122 und an der Rahmenanordnung 110 den ersten Kondensatorelektroden 121, 122 gegenüberliegend vorgesehene zweite Kondensatorelektroden 125, 126 umfasst. Die an der Sensormasse 101 vorgesehenen ersten Kondensatorelektroden 121, 122 sind über eine Kopplungsanordnung, die durch eine die Torsionselemente 105 umfassende galvanische Verbindung gebildet ist und die über eine Metallisierung 141 an dem Mittelteil 111 der Rahmenanordnung 110 verläuft, mit einem an der Rahmenanordnung 110, nämlich an deren ersten Deckelteil 112 vorgesehenen ersten Anschlusselement 142 verbunden. Zweite Anschlusselemente 145, 146, die ebenfalls an dem ersten Deckelteil 112 der Rahmenanordnung 110 vorgesehen sind, sind mit den zweiten Kondensatorelektroden gekoppelt.

Die auf der Sensormasse 101 vorgesehenen ersten Kondensatorelektroden 121, 122 sind durch ein leitfähiges Material gebildet, aus welchem die Sensormasse 101 hergestellt ist. Auf diese Weise ergibt sich für die ersten und zweiten Kondensatorelektroden 121, 122 und 125, 126 ein elektrisches Ersatzschaltbild, wie es in Fig. 1b) gezeigt ist. Zwei Kapazitäten E1 und E3 sind zwischen zwei Bezugsspannungen +Vref (Anschlusselement 145) und -Vref (Anschlusselement 146) in Reihe geschaltet und in ihrer Mitte mit einer Klemme K1 verbunden (Anschlusselement 142), an welcher das Ausgangssignal Vout abgenommen werden kann.

Das erste Anschlusselement 142 und die zweiten Anschlusselemente 145, 146 sind in einer gemeinsamen Anschlussebene 150 angeordnet, welche bei dem hier besprochenen ersten Ausführungsbeispiel gegen die an der Sensormasse 101 vorgesehenen ersten Kondensatorelektroden 121, 122 versetzt ist, wobei diese Höhenversetzung mittels der durch die Torsionselemente 105, die Metallisierung 141 und das erste Anschlusselement 142 gebildete Kopplungsanordnung überbrückt wird. In der besagten gemeinsamen Anschlussebene 150 sind zusammen mit den ersten und zweiten Anschlusselementen 142 und 145, 146 auch die zweiten Kondensatorelektroden 125, 126 angeordnet, wobei die Anschlussebene 150 durch die eine Seite des ersten Deckelteils 112 gebildet ist. Das erste Anschlusselement 142, die zweiten Anschlusselemente 145, 146 sowie die zweiten Kondensatorelektroden 125, 126, die mit den letzteren verbunden sind, sind aus einer einzigen auf der der Sensormasse 101 zugewandten Seite des ersten Deckelteils 112 ausgebildeten leitenden Schicht hergestellt.

Wie aus Fig. 2 ersichtlich ist, bildet das Mittelteil 111 zusammen mit dem ersten Deckelteil 112 und dem zweiten Deckelteil 113 ein hermetisch einschließendes Gehäuse, innerhalb dessen die Sensormasse 101 zusammen mit den ersten Kondensatorelektroden 121, 122 und den zweiten Kondensatorelektroden 125, 126 angeordnet ist. Das erste Deckelteil 112 und das zweite Deckelteil 113 der Rahmenanordnung 110 sind aus einem alkalimetallhaltigen Glas hergestellt.

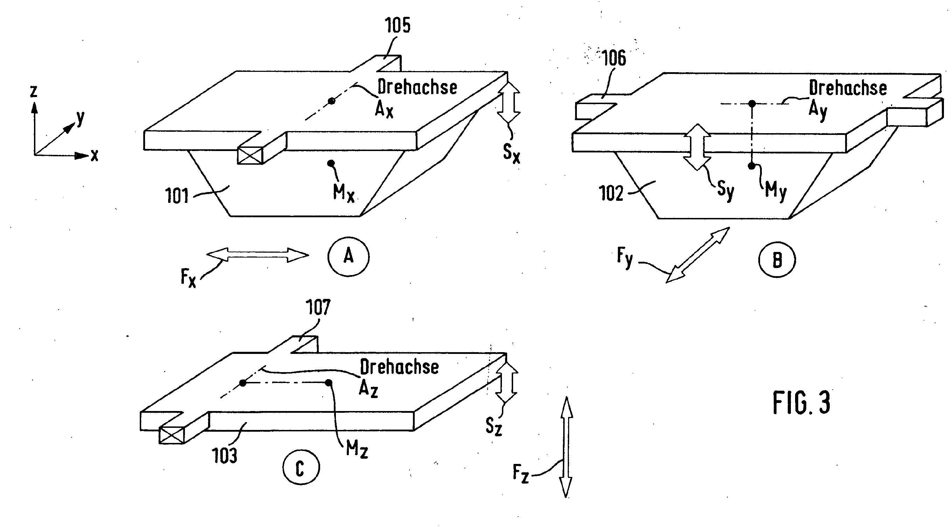

Fig. 3 zeigt die Sensormassen 101, 102, 103, die zur Erfassung der Beschleunigung eines Objekts in mehreren Richtungen, nämlich den Richtungen x, y, z des in Fig. 3 dargestellten Koordinatensystems vorgesehen sind. Die Sensormasse 101 (Teilfigur A) entspricht der Sensormasse 101 des in den Fig. 1a) und 2 dargestellten Beschleunigungssensors. Sie ist mittels Torsionselementen 105 torsionselastisch gelagert und dabei um eine Ausgangslage beweglich. Die Torsionselemente 105 definieren eine Drehachse, welche gegen den Massenschwerpunkt Mx der Sensormasse 101 in der Höhe nach oben versetzt ist, so dass eine in x-Richtung wirkende Beschleunigungskraft Fx eine Auslenkung Sx bewirkt. Die Sensormasse 102 (Teilfigur B) entspricht in ihrer Konfiguration im wesentlichen der Sensormasse 101, verfügt ebenfalls über Torsionselemente 106, welche eine Lagervorrichtung bilden, mittels derer die Sensormasse 102 drehelastisch gelagert ist, jedoch ist die durch die Torsionselemente 106 definierte Drehachse in der horizontalen Ebene um 90 gegenüber der Drehachse der Sensormasse 101 verdreht. Die durch die Torsionselemente 106 gebildete Drehachse ist wiederum gegen den Massenschwerpunkt My der Sensormasse 102 in der Höhe nach oben versetzt, so dass eine in y-Richtung wirkende Beschleunigungskraft Fy eine Auslenkung Sy der Sensormasse um ihre Ausgangslage hervorruft. Die Sensormassen 101 und 102 sind entsprechend der Sensormasse 101 der Fig. 1a) und 2 mit ersten Kondensatorelektroden 121 und 122 einer (in Fig. 3 nicht eigens dargestellten) kapazitiven Erfassungseinrichtung versehen, welche ein die Lage der Sensormasse 101 bzw. 102 relativ zu einer (in Fig. 3 ebenfalls nicht eigens dargestellten Rahmenanordnung) repräsentierendes kapazitives Ausgangssignal erzeugt.

Eine dritte Sensormasse 103 (Teilfigur C der Fig. 3) ist mittels eine Lagervorrichtung bildenden Torsionselementen 107 um eine Drehachse drehbar gelagert. Der Massenschwerpunkt Mz ist seitlich versetzt zu der durch die Torsionselemente 107 gebildete Drehachse. Eine durch eine Beschleunigung in der vertikalen z-Richtung bewirkte vertikale Beschleunigung Fz bewirkt eine Auslenkung Sz des Endes der Sensormasse 103, wie in Teilfigur C gezeigt ist.

Jede der Sensormassen 101, 102, 103 ist mit einer kapazitiven Erfassungseinrichtung zur Erzeugung eines ihre jeweilige Lage relativ zu einer (nicht dargestellten) Rahmenanordnung repräsentierenden Ausgangssignals versehen. Diese kapazitive Erfassungseinrichtung besteht jeweils aus (in Fig. 3 nicht dargestellten) ersten Kondensatorelektroden, die paarweise jeweils auf entgegengesetzten Seiten der durch die Torsionselemente 105, 106 bzw. 107 definierten Drehachsen Ax, Ay, Az vorgesehen. Diesen ersten Kondensatorelektroden gegenüberliegend sind zweite Kondensatorelektroden der kapazitiven Erfassungseinrichtung an der (nicht dargestellten) Rahmenanordnung des Beschleunigungssensors vorgesehen. Für die in den Teilfiguren A und B dargestellten Sensormassen 101 und 102 bedeutet dies eine Anordnung ähnlich der, wie sie in Fig. 1a) und 2 dargestellt ist, bei der in der Teilfigur C der Fig. 3 dargestellten Sensormasse 103 ist die eine erste Kondensatorelektrode links von der durch die Torsionselemente 107 definierten Drehachse auf dem kurzen Stück der Sensormasse 103 angeordnet, die andere Kondensatorelektrode rechts von der durch die Torsionselemente 107 definierten Drehachse symmetrisch zu der ersteren. Zur Erzeugung des kapazitiven Ausgangssignals der kapazitiven Erfassungseinrichtungen wird wiederum die Differenzkapazität der paarweisen Kondensatorelektroden verwendet, ähnlich wie bei dem anhand der Fig. 1 und 2 erläuterten Ausführungsbeispiel. Die auf der Sensormasse 101, 102 bzw. 103 vorgesehenen ersten Kondensatorelektroden sind bei dem beschriebenen Ausführungsbeispiel durch ein leitfähiges Material gebildet, aus welchem die Sensormasse 101, 102,103 hergestellt ist.

Jede der in Fig. 3 dargestellten Sensormassen 101,102,103 wird vorzugsweise zunächst mit einer eigenen Rahmenanordnung als Einzelsensor hergestellt, diese Einzelsensoren werden dann zu einem Gesamtsensor zusammengefügt, welche in der Lage ist, Beschleunigungen in allen drei Raumrichtungen x, y, z zu erfassen.

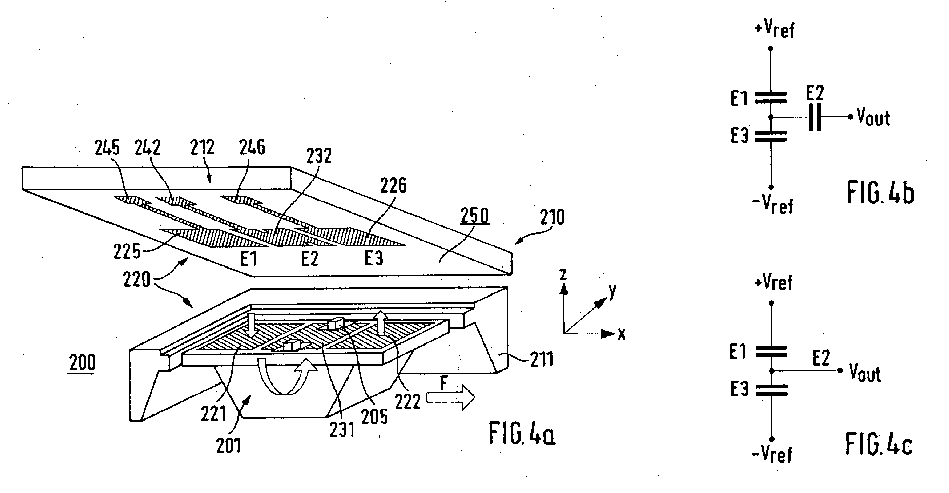

Der in Fig. 4a, 5 und 6 dargestellte Beschleunigungssensor gemäß einem zweiten und einem dritten Ausführungsbeispiel der Erfindung ist insgesamt mit dem Bezugszeichen 200; 300 bezeichnet. Der Beschleunigungssensor 200; 300, der zur Erfassung der Beschleunigung eines Objekts in einer Richtung x des in Fig. 4a) eingezeichneten Koordinatensystems dient, umfasst eine Rahmenanordnung 210; 310 welche bezüglich dem Objekt ortsfest ist, dessen Beschleunigung erfasst werden soll, und umfasst weiterhin eine träge Sensormasse 201; 301, welche relativ zu der Rahmenanordnung 210; 310 des Beschleunigungssensors 200; 300 beweglich ist. Die Sensormasse 201; 301 ist mittels einer Lagervorrichtung 205; 305 bezüglich der Rahmenanordnung 210; 310 um eine Ausgangslage elastisch gelagert.

Die Rahmenanordnung 210; 310 umfasst ein die Sensormasse 201; 301 seitlich umgebendes Mittelteil 211; 311 und ein höhenversetzt zu der Sensormasse 201; 301 an dem Mittelteil 211; 311 angeordnetes erstes Deckelteil 212, 312. Die Lagervorrichtung ist bei den in Fig. 4 bis 6 dargestellten zweiten und dritten Ausführungsbeispielen durch Biegeelemente 205; 305 gebildet, an welchen die Sensormasse 201; 301 bezüglich der Rahmenanordnung 210; 310 um die besagte Ausgangslage biegeelastisch gelagert ist. Wie aus Fig. 4a zu sehen ist, sind davon zwei in einer gemeinsamen Ebene befindliche, voneinander beabstandet an der Sensormasse 201; 301 festgelegte Biegeelemente 205; 305 vorgesehen, welche eine Drehachse definieren, um welche die Sensormasse 201; 301 sich beim Auftreten einer Beschleunigungskraft Fx in Richtung der x-Achse bewegt, wobei die Auslenkung Sx am Rand der Sensormasse 201; 301 nach oben und unten gerichtet ist. Die Biegeelemente 205; 305 sind einerseits an der Sensormasse 201; 301 festgelegt und andererseits an dem ersten Deckelteil 212; 312 der Rahmenanordnung 210; 310.

Der Beschleunigungssensor 200; 300 verfügt über eine kapazitive Erfassungseinrichtung, die insgesamt mit dem Bezugszeichen 220; 320 versehen ist und der Erzeugung eines die Lage der Sensormasse 201; 301 relativ zu der Rahmenanordnung 210; 310 und damit die Größe der die Sensormasse 201; 301 aus ihrer Ausgangslage auslenkenden Beschleunigungskraft Fx repräsentierenden Ausgangssignals dient. Dieses ist ein Maß für die Beschleunigung des Objekts, an welchem der Beschleunigungssensor angebracht ist. Die kapazitive Erfassungseinrichtung 220; 320 enthält erste Kondensatorelektroden 221, 222; 321, 322, welche an der Sensormasse 201; 301 vorgesehen sind, und zweite Kondensatorelektroden 225, 226; 325, 326, die den ersten Kondensatorelektroden 221, 222; 321, 322 gegenüberliegend an der Rahmenanordnung 210; 310, genau gesagt an deren erstem Deckelteil 212; 312 vorgesehen sind.

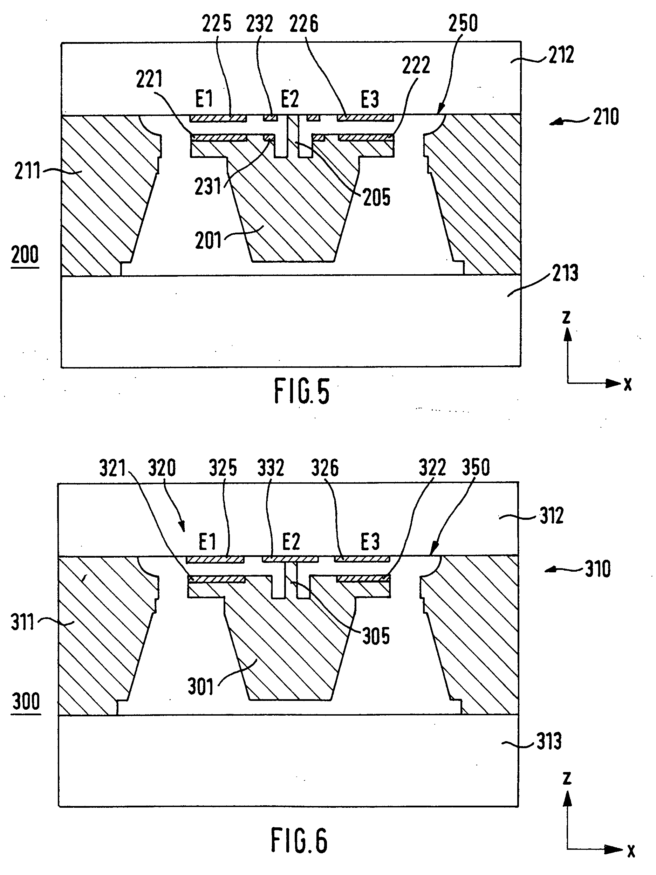

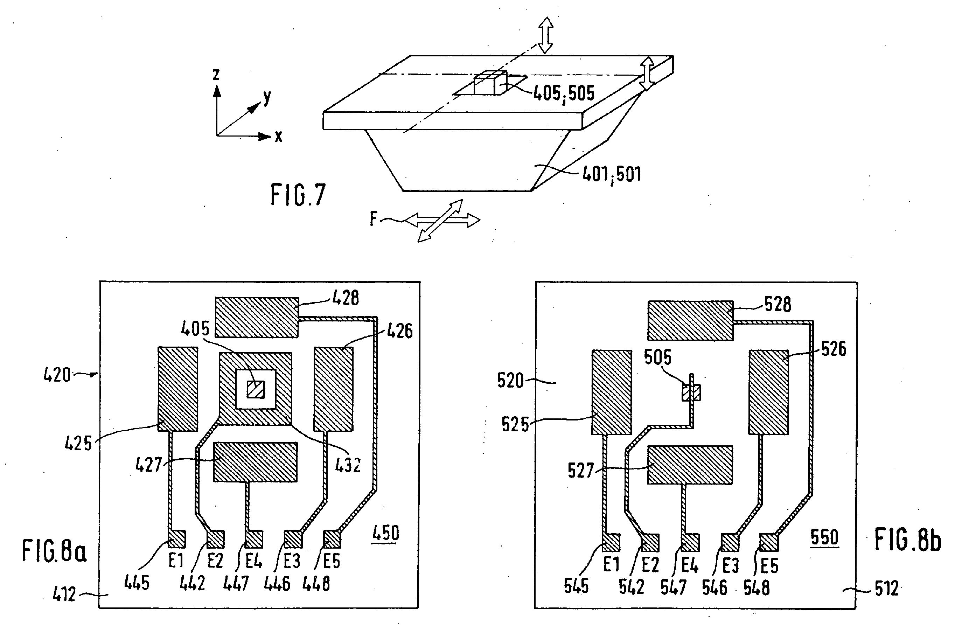

Allgemein ist eine Kopplungsanordnung vorgesehen, die der Kopplung der an der Sensormasse 201; 301 vorgesehenen ersten Kondensatorelektroden 221, 222 bzw. 321, 322 mit ersten Anschlusselementen dient, von denen das erste Anschlusselement 242 des Beschleunigungssensors 200 gemäß dem zweiten Ausführungsbeispiel in Fig. 4a) zu sehen ist. Dieses erste Anschlusselement 242 ist an der Rahmenanordnung 210, genauer an deren erstem Deckelteil 212 angeordnet. Für den in Fig. 6 dargestellten Beschleunigungssensor 300 nach dem dritten Ausführungsbeispiel verhält es sich entsprechend, wobei dort das dem ersten Anschlusselement 242 von Fig. 4a entsprechende Anschlusselement jedoch nicht sichtbar ist.

Die an dem ersten Deckelteil 212; 312 vorgesehenen zweiten Kondensatorelektroden 225, 226 bzw. 325, 326 sind mit zweiten Anschlusselementen gekoppelt, von denen wiederum die zweiten Anschlusselemente 245, 246, die mit den zweiten Kondensatorelektroden 225; 226 des Beschleunigungssensors 200 verbunden sind, in Fig. 4a zu sehen sind. Für den in Fig. 6 dargestellten Beschleunigungssensor 300 des dritten Ausführungsbeispiels verhält es sich entsprechend.

Die ersten Anschlusselemente, vgl. das Anschlusselement 242 in Fig. 4a, und die zweiten Anschlusselemente, vgl. die Anschlusselemente 245, 246 in Fig. 4a, sind in einer gemeinsamen Anschlussebene 250; 350 angeordnet, welche gegen die an der Sensormasse 201; 301 vorgesehenen ersten Kondensatorelektroden 221, 222; 321, 322 höhenversetzt und durch die der Sensormasse 201; 301 zugewandte Seite des ersten Deckelteils 212; 312 gebildet ist. Die Kopplungsanordnung, welche die auf der Sensormasse 201 bzw. 301 befindlichen ersten Kondensatorelektroden 221, 222 bzw. 321, 322 mit den ersten Anschlusselementen, vgl. 242 in Fig. 4a), verbindet, bildet eine Überbrückung der Höhenversetzung zwischen der Sensormasse 201; 301 und der besagten gemeinsamen Anschlussebene 250; 350.

Bei dem Beschleunigungssensor 200 des in Fig. 4a und Fig. 5 dargestellten zweiten Ausführungsbeispiels ist die Kopplungsanordnung durch eine kapazitive Verbindung gebildet, die eine auf der der Sensormasse 201 zugewandten Seite des ersten Deckelteils 212 ausgebildete zweite Kopplungselektrode 232 und eine dieser gegenüberliegend an der Sensormasse 201 ausgebildete erste Kopplungselektrode 231 umfassen. Die zweite Kopplungselektrode 232 ist mit dem oben genannten ersten Anschlusselement 242 verbunden, welche an der der Sensormasse 201 zugewandten Seite des ersten Deckelteils 212 vorgesehen ist, vgl. Fig. 4a.

Fig. 4b) zeigt ein elektrisches Ersatzschaltbild des Beschleunigungssensors 200 gemäß dem zweiten Ausführungsbeispiel, wie es in Fig. 4a und Fig. 5 dargestellt ist. Wie ersichtlich ist, sind die durch die ersten Kondensatorelektroden 221, 222 und die zweiten Kondensatorelektroden 225, 226 gebildeten Kapazitäten E1 und E3 zwischen einer positiven Bezugsspannung +Vref (Anschlussklemme 245) und einer negativen Bezugsspannung -Vref (Anschlussklemme 246) in Reihe geschaltet, wobei deren Mitte über eine durch die kapazitive Kopplungsanordnung gebildete Kapazität E2 das Ausgangssignal Vout abgibt.

Bei dem in Fig. 6 dargestellten dritten Ausführungsbeispiel des Beschleunigungssensors 300 dagegen sind die ersten Kondensatorelektroden 321, 322 auf galvanischem Wege mit dem ersten Anschlusselement entsprechend dem Anschlusselement 242 in Fig. 4a verbunden, nämlich über die Biegeelemente 305, welche aus einem leitenden Material gebildet sind. Auf diese Weise entsteht eine galvanische Verbindung der durch die ersten Kondensatorelektroden 321, 322 und 325, 326 gebildeten Kapazitäten E1 und E3, über die die Ausgangsspannung Vout abgenommen werden kann, vgl. Fig. 4c.

Wie auch bei dem in Fig. 1a und Fig. 2 dargestellten ersten Ausführungsbeispiel des Beschleunigungssensors ist bei den Beschleunigungssensoren 200 und 300 gemäß dem zweiten und dritten Ausführungsbeispiel in den Figuren 4a, 5 und 6 sowohl das erste Deckelteil 212; 312 als auch das zweite Deckelteil 213; 313 aus einem alkalimetallhaltigen Glas hergestellt. Das an dem Mittelteil 211; 311 der Rahmenanordnung 210; 310 dem ersten Deckelteil 212; 312 gegenüberliegend angeordnete zweite Deckelteil 213; 313 bildet zusammen mit dem Mittelteil 211; 311 und dem ersten Deckelteil 212; 312 ein die Sensormasse 201; 301 zusammen mit den ersten Kondensatorelektroden 221, 222; 321, 322 und den zweiten Kondensatorelektroden 225, 226; 325, 326 hermetisch einschließendes Gehäuse.

Die ersten Anschlusselemente, vgl. 242 in Fig. 4a, die zweiten Anschlusselemente, vgl. 245, 246 in Fig. 4a), und die zweiten Kondensatorelektroden 225, 226 bzw. 325, 326 sind bei den in Fig. 4a, Fig. 5 und Fig. 6 dargestellten Ausführungsbeispielen aus einer einzigen leitenden Schicht hergestellt, die auf der der Sensormasse 201; 301 zugewandten Seite des ersten Deckelteils 212; 312 ausgebildet ist.

Fig. 7 zeigt eine Sensormasse 401; 501 von vierten und fünften Ausführungsbeispielen des Beschleunigungssensors, bei denen Beschleunigungen in zwei Richtungen, nämlich den Richtungen x und y der Horizontalebene erfasst werden können. An der Sensormasse 401; 501 ist zentral ein einziges Biegeelement 405; 505 festgelegt, so dass die Sensormasse beim Auftreten von Beschleunigungskräften Fx bzw. Fy bezüglich einer (in Fig. 7 nicht dargestellten) Rahmenanordnung in zwei verschiedenen Richtungen beweglich ist.

Zum Erfassen von die Lage der Sensormasse 401; 501 repräsentierenden Ausgangssignalen sind kapazitive Erfassungseinrichtungen vorgesehen, welche anhand der Fig. 8a und b beschrieben werden sollen.

Fig. 8 zeigt einen Teil von kapazitiven Erfassungseinrichtungen 420; 520 zum Erfassen der Lage der Sensormasse 401; 501 in zwei Richtungen. Diese enthält vier zweite Kondensatorelektroden 425, 426, 427, 428; 525, 526, 527, 528, die paarweise einander gegenüberliegend auf entgegengesetzten Seiten des Biegeelements 405; 505 an einem ersten Deckelteil 412; 512 einer Rahmenanordnung vorgesehen sind, ähnlich den in Fig. 1a und Fig. 2 bzw. Fig. 4a) bis Fig. 6 dargestellten Ausführungsbeispielen. Diese zweiten Kondensatorelektroden 425, 426, 427, 428; 525, 526, 527, 528 sind elektrisch verbunden mit zweiten Anschlusselementen 445, 446, 447, 448; 545, 546, 547, 548. Den zweiten Kondensatorelektroden 425, 426, 427, 428; 525, 526, 527, 528 gegenüberliegend sind an der Sensormasse 401; 501 ähnliche erste Kondensatorelektroden vorgesehen, welche in Fig. 7 jedoch nicht eigens dargestellt sind.

Bei dem in Fig. 8a dargestellten vierten Ausführungsbeispiel enthält eine Kopplungsanordnung, welche die ersten Kondensatorelektroden, die auf der Sensormasse 401 vorgesehen sind, mit einem ersten Anschlusselement 442 auf dem ersten Deckelteil 412 verbindet, eine das Biegeelement 405 umgebende erste Kopplungselektrode, welche an der Sensormasse 401 vorgesehen ist (nicht dargestellt) und eine das Biegeelement 405 umgebende, der ersten Kopplungselektrode gegenüberliegend angebrachte zweite Kopplungselektrode 432, welche an dem ersten Deckelteil 412 der Rahmenanordnung vorgesehen ist. Auf diese Weise wird eine kapazitive Verbindung zwischen den an der Sensormasse 401 vorgesehenen ersten Kondensatorelektroden und dem ersten Anschlusselement 442 gebildet.

Bei dem in Fig. 8b) gezeigten fünften Ausführungsbeispiel dagegen ist die Kopplungsanordnung durch eine galvanische Verbindung gebildet, welche das Biegeelement 505 umfasst, so dass die an der Sensormasse 501, vgl. Fig. 7, vorgesehenen ersten Kondensatorelektroden über das Biegeelement 505 galvanisch mit dem ersten Anschlusselement 542 verbunden sind.

Wie auch bei den vorherigen Ausführungsbeispielen sind die an der Sensormasse 401; 501 vorgesehenen ersten Kondensatorelektroden durch ein leitfähiges Material gebildet, aus welchem die Sensormasse 401; 501 hergestellt ist.

Bei besonders bevorzugten Ausführungsformen der Erfindung ist die Sensormasse aus einkristallinem Silizium gefertigt. Dabei sind die Kondensatorelektroden der Sensormasse durch die Sensormasse selbst gebildet. Die Sensormasse ist in diesen Fällen mit dem Rahmen elektrisch leitend verbunden, wobei die Torsionsbalken bzw. Aufhängungen der Sensormasse leitende Verbindungen zur Sensormasse bilden. Damit ist die Sensormasse auf einem bestimmten elektrischen Potential und bildet mit gegenüberliegenden Kondensatorelektroden kapazitive Elemente zur Messung der Auslenkung der Sensormasse. Die elektrische Kontaktierung der Sensormasse erfolgt zum Beispiel an einer Stelle des Rahmens, die gut zugänglich ist und über die Torsionsbalken mit der der Sensormasse elektrisch leitend verbunden ist.

Die Kontaktierung aller elektrischen Anschlüsse kann von einer Seite her erfolgen, beispielsweise von der Rückseite des Sensors oder von seiner Oberseite bei der in Fig. 1a gezeigten Ausrichtung. Bzw. Wafers. Es ist dabei möglich, im Wafer Löcher vorzusehen, die leitfähiges Material enthalten bzw. mit leitfähigem Material gefüllt sind, um innenliegende Anschlusselektroden 142, 145, 146, beispielsweise auf der der Sensormasse 101 gegenüberliegenden Seite 150 des Deckelelements 112, von außen elektrisch zu kontaktieren.

An Stelle der in Fig. 1a gezeigten Kopplungsanordnung 141, 142 mit einer Anschlusselektrode 142 der Sensormasse 101 am Deckelteil 112 kann die Anschlusselektrode der Sensormasse 101 auch am unteren Rahmenteil 110 angeordnet sein, beispielsweise auf der Unterseite des Absatzes bzw. Vorsprungs des Rahmenteils 110, d.h. unterhalb des in Fig. 1a dargestellten Kopplungselements 141.

### Bezugszeichenliste

- 100; 200; 300: Beschleunigungssensor
- 101, 102, 103 ; 201; 301; 401; 501: Sensormasse
- 105, 106, 107; 205; 305; 405; 505: Lagervorrichtung
- 110; 210; 310: Rahmenanordnung
- 111; 211; 311: Mittelteil
- 112; 212; 312; 412; 512: erstes Deckelteil
- 113; 213; 313: zweites Deckelteil
- 120; 220; 320; 420; 520: kapazitive Erfassungseinrichtung
- 121, 122; 221, 222; 321, 322: erste Kondensatorelektroden
- 125, 126; 225, 226; 325, 326; 425, 426, 427, 428; 525, 526, 527, 528: zweite Kondensatorelektroden
- 141, 142; 231, 232, 242; 332; 432, 442; 542: Kopplungsanordnung
- 231: erste Kopplungselektrode
- 232; 332; 432: zweite Kopplungselektrode
- 141: Metallisierung
- 142; 242; 442; 542: erste Anschlusselemente
- 145, 146; 245, 246; 445, 446, 447; 545, 546, 547, 548: zweite Anschlusselemente
- 150; 250; 350; 450; 550: Anschlussebene

## Patentansprüche

1. Mikromechanischer kapazitiver Beschleunigungssensor zur Erfassung der Beschleunigung eines Objekts in mindestens einer Richtung, mit einer Rahmenanordnung (110; 210; 310), einer trägen Sensormasse (101, 102, 103; 201; 301; 401; 501), die aus einem Wafer gefertigt ist und relativ zu der Rahmenanordnung (110; 210; 310) um eine Drehachse (Aₓ, A_{y}) beweglich gelagert ist, und einer kapazitiven Erfassungseinrichtung (120; 220; 320; 420; 520) zur Erzeugung mindestens eines die Lage der Sensormasse (101, 102, 103; 201; 301; 401; 501) relativ zu der Rahmenanordnung (110; 210; 310) repräsentierenden kapazitiven Ausgangssignals, **dadurch gekennzeichnet, dass** die träge Sensormasse (101, 102, 103; 201; 301; 401; 501) einen Schwerpunkt (Mₓ, M_{y}) hat, der gegenüber der Drehachse (Aₓ, A_{y}) in einer Richtung senkrecht zur Waferebene versetzt angeordnet ist.

2. Beschleunigungssensor nach Anspruch 1, **dadurch gekennzeichnet, dass** die Sensormasse (101, 102, 103; 201; 301; 401; 501) und/oder die Rahmenanordnung (110; 210; 310) monolithisch aus einem einzigen einkristallinen Silizium-Wafer gefertigt sind.

3. Beschleunigungssensor nach Anspruch 1 oder 2, **gekennzeichnet durch** eine Lagervorrichtung (105, 106, 107; 205, 305; 405; 505) zur Lagerung der trägen Sensormasse (101, 102, 103; 201; 301; 401; 501), die tordierbare, aus Silizium gefertigte Elemente umfasst.

4. Beschleunigungssensor nach einem der vorhergehenden Ansprüche, **gekennzeichnet durch** eine Lagervorrichtung (105, 106, 107; 205, 305; 405; 505) zur Lagerung der trägen Sensormasse (101, 102, 103; 201; 301; 401; 501), die eine elektrisch leitende Verbindung zwischen der Sensormasse (101, 102, 103; 201; 301; 401; 501) und einer an der Rahmenanordnung (110; 210; 310) vorgesehenen elektrischen Kontaktierung bildet.

5. Beschleunigungssensor nach einem der vorhergehenden Ansprüche, **gekennzeichnet durch** eine Lagervorrichtung (105, 106, 107; 205, 305; 405; 505), die an der Sensormasse (101,102,103; 201; 301; 401; 501) nahe der Waferoberfläche angeordnet ist.

6. Beschleunigungssensor nach einem der vorhergehenden Ansprüche, **dadurch gekennzeichnet, dass** die Sensormasse (101, 102, 103; 201; 301; 401; 501) kubisch oder in Form eines Quaders oder Kegelstumpfes oder in Form einer stumpfen Pyramide ausgestaltet ist.

7. Beschleunigungssensor nach einem der vorhergehenden Ansprüche, **dadurch gekennzeichnet, dass** mehrere träge Sensormassen (101, 102, 103; 201; 301; 401; 501) vorgesehen sind, die um jeweils um eine Drehachse (Aₓ, A_{y} A_{z}) beweglich gelagert sind um Beschleunigungen in mehreren zueinander senkrecht gerichteten Richtungen (x, y, z) zu messen, wobei ein oder mehrere Sensormassen (101, 102, 103; 201; 301; 401; 501) jeweils einen Schwerpunkt (Mₓ, M_{y}) haben, der gegenüber der zugehörigen Drehachse (Aₓ, A_{y}) in einer Richtung senkrecht zur Waferebene versetzt angeordnet ist.

8. Beschleunigungssensor nach einem der vorhergehenden Ansprüche, **dadurch gekennzeichnet, dass** der Schwerpunkt der Sensormasse (101,102, 103; 201; 301; 401; 501) relativ zur zugehörigen Drehachse (Aₓ, A_{y}) zusätzlich lateral in Richtung der Waferebene versetzt angeordnet ist.

9. Beschleunigungssensor nach einem der vorhergehenden Ansprüche, **gekennzeichnet durch** an der Sensormasse (101, 102, 103; 201; 301; 401; 501) vorgesehene erste Kondensatorelektroden (121, 122; 221, 222; 321, 322) und diesen gegenüberliegend an der Rahmenanordnung (110; 210; 310) vorgesehene zweiten Kondensatorelektroden (125, 126; 225, 226; 325, 326; 425, 426, 427, 428; 525, 526, 527, 528), wobei erste Anschlusselemente (142; 242; 442; 542) zum elektrischen Anschluss der ersten Kondensatorelektroden (121, 122; 221, 222; 321, 322) und/oder zweite Anschlusselemente (145, 146; 245, 246; 445, 446, 447, 448; 545, 546, 547, 548) zum elektrischen Anschluss der zweiten Kondensatorelektroden (125, 126; 225, 226; 325, 326; 425, 426, 427, 428; 525, 526, 527, 528) in einer gemeinsamen Anschlussebene (150; 250; 350; 450; 550) angeordnet sind.

10. Beschleunigungssensor nach Anspruch 9, **dadurch gekennzeichnet, dass** die Kontaktierung der ersten Anschlusselemente (142; 242; 442; 542) und/oder der zweiten Anschlusselemente (145, 146; 245, 246; 445, 446, 447, 448; 545, 546, 547, 548) von einer einzigen Seite erfolgt.

11. Beschleunigungssensor nach einem der vorhergehenden Ansprüche, **dadurch gekennzeichnet, dass** die elektrische Kontaktierung der kapazitiven Erfassungseinrichtung (120; 220; 320; 420; 520) von einer einzigen Seite erfolgt.

12. Beschleunigungssensor nach einem der Ansprüche 9 bis 11, **dadurch gekennzeichnet, dass** die an der Rahmenanordnung (110; 210; 310) vorgesehenen zweiten Kondensatorelektroden (125, 126; 225, 226; 325, 326; 425, 426, 427, 428; 525, 526, 527, 528) zusammen mit den ersten und zweiten Anschlusselementen (142; 242; 442; 542 bzw. 145, 146; 245, 246; 445, 446, 447, 448; 545, 546, 547, 548) in der gemeinsamen Anschlussebene (150; 250; 350; 450; 550) angeordnet sind.

13. Beschleunigungssensor nach einem der vorhergehenden Ansprüche, **gekennzeichnet durch** eine Kopplungsanordnung (141, 142; 231, 232 242; 332; 432; 442; 542) zur Kopplung von an der Sensormasse (101, 102, 103; 201; 301; 401; 501) vorgesehenen ersten Kondensatorelektroden (121, 122; 221, 222; 321, 322) mit an der Rahmenanordnung (110; 210; 310) vorgesehenen ersten Anschlusselementen (142; 242; 442; 542), wobei die Kopplungsanordnung (141, 142; 231, 232 242; 332; 432; 442; 542) eine galvanische oder kapazitive Verbindung zur Überbrückung einer Höhenversetzung zwischen den ersten Kondensatorelektroden (121,122; 221, 222; 321, 322) und einer gemeinsamen Anschlussebene (150; 250; 350; 450; 550) umfasst.

14. Beschleunigungssensor nach einem der vorhergehenden Ansprüche, **dadurch gekennzeichnet, dass** die Rahmenanordnung (110; 210; 310) ein die Sensormasse (101, 102, 103; 201; 301; 401; 501) seitlich umgebendes Mittelteil (111; 211; 311) und ein höhenversetzt zu der Sensormasse (101, 102, 103; 201; 301; 401; 501) an dem Mittelteil (111; 211; 311) angeordnetes erstes Deckelteil (112; 212; 312; 412; 512) enthält, wobei an dem ersten Deckelteil (112; 212; 312; 412; 512) auf seiner der Sensormasse (101, 102, 103; 201; 301; 401; 501) zugewandten Seite zweite Kondensatorelektroden (125, 126; 225, 226; 325, 326; 425, 426, 427, 428; 525, 526, 527, 528) vorgesehen sind.

15. Beschleunigungssensor nach Anspruch 14, **dadurch gekennzeichnet, dass** die der Sensormasse (101, 102, 103; 201; 301; 401; 501) zugewandte Seite des ersten Deckelteils (112; 212; 312; 412; 512) eine gemeinsame Anschlussebene (150; 250; 350; 450; 550) zum elektrischen Anschluss der kapazitiven Erfassungseinrichtung (120; 220; 320; 420; 520) bildet.

16. Beschleunigungssensor nach einem Ansprüche 9 bis 15, **dadurch gekennzeichnet, dass** die zweiten Kondensatorelektroden (125, 126; 225, 226; 325, 326; 425, 426, 427, 428; 525, 526, 527, 528) entweder durch eine Metallisierung auf der Sensormasse (101, 102, 103; 201; 301; 401; 501) oder durch die auf einem elektrischen Potential befindliche Sensormasse (101,102,103; 201; 301; 401; 501) selbst gebildet sind.

17. Mikromechanischer kapazitiver Beschleunigungssensor, insbesondere nach einem der vorhergehenden Ansprüche, zur Erfassung der Beschleunigung eines Objekts in mindestens einer Richtung (x, y, z), mit einer Rahmenanordnung (110; 210; 310), welche bezüglich dem Objekt ortsfest ist, mit einer trägen Sensormasse (101, 102, 103; 201; 301; 401; 501), welche relativ zu der Rahmenanordnung (110; 210; 310) des Beschleunigungssensors (100; 200; 300) beweglich ist, mit einer Lagervorrichtung (105, 106, 107; 205; 305; 405; 505), durch welche die Sensormasse (101, 102, 103; 201; 301; 401; 501) bezüglich der Rahmenanordnung (110; 210; 310) um eine Ausgangslage elastisch gelagert ist, und mit einer kapazitiven Erfassungseinrichtung (120; 220; 320; 420; 520) zur Erzeugung mindestens eines die Lage der Sensormasse (101, 102, 103; 201; 301; 401; 501) relativ zu der Rahmenanordnung (110; 210; 310) repräsentierenden kapazitiven Ausgangssignals, welche an der Sensormasse (101, 102, 103; 201; 301; 401; 501) vorgesehene erste Kondensatorelektroden (121, 122; 221, 222; 321, 322) und an der Rahmenanordnung (110; 210; 310) den ersten Kondensatorelektroden (121, 122; 221, 222; 321, 322) gegenüberliegend vorgesehene zweite Kondensatorelektroden (125, 126; 225, 226; 325, 326; 425, 426, 427, 428; 525, 526, 527, 528) umfaßt, und mit einer Kopplungsanordnung (141, 142; 231, 232, 242; 332; 432; 442; 542) zur Kopplung der an der Sensormasse (101, 102, 103; 201; 301; 401; 501) vorgesehenen ersten Kondensatorelektroden (121, 122; 221, 222; 321, 322) mit an der Rahmenanordnung (110; 210; 310) vorgesehenen ersten Anschlußelementen (142; 242; 442; 542), und mit zweiten Anschlußelementen (145, 146; 245, 246; 445, 446, 447, 448; 545, 546, 547, 548), mit welchen die zweiten Kondensatorelektroden (125,126; 225, 226; 325, 326; 425, 426, 427, 428; 525, 526, 527, 528) gekoppelt sind, **dadurch gekennzeichnet, daß** die ersten Anschlußelemente (142; 242; 442; 542) und/oder die zweiten Anschlußelemente (145, 146; 245, 246; 445, 446, 447, 448; 545, 546, 547, 548) in einer gemeinsamen Anschlußebene (150; 250; 350; 450; 550) angeordnet sind, welche gegen die an der Sensormasse (101, 102, 103; 201; 301; 401; 501) vorgesehenen ersten Kondensatorelektroden (121, 122; 221, 222; 321, 322) oder/und gegen die an der Rahmenanordnung (110; 210; 310) vorgesehenen zweiten Kondensatorelektroden (125, 126; 225, 226; 325, 326; 425, 426, 427, 428; 525, 526, 527, 528) höhenversetzt ist.

18. Beschleunigungssensor nach Anspruch 17, **dadurch gekennzeichnet, daß** die Kopplungsanordnung (141, 142; 231, 232, 242; 332; 432, 442; 542) Mittel zur Überbrückung der Höhenversetzung zwischen den ersten Kondensatorelektroden (121, 122; 221, 222; 321, 322) oder/und den zweiten Kondensatorelektroden (125, 126; 225, 226; 325, 326; 425, 426, 427, 428; 525, 526, 527, 528) und der gemeinsamen Anschlußebene (150; 250; 350; 450; 550) enthält.

19. Beschleunigungssensor nach Anspruch 17 oder 18, **dadurch gekennzeichnet, daß** die an der Rahmenanordnung (110; 210; 310) vorgesehenen zweiten Kondensatorelektroden (125, 126; 225, 226; 325, 326; 425, 426, 427, 428; 525, 526, 527, 528) zusammen mit den ersten und zweiten Anschlußelementen (142; 242; 442; 542 bzw. 145, 146; 245, 246; 445, 446, 447, 448; 545, 546, 547, 548) in der gemeinsamen Anschlußebene (150; 250; 350; 450; 550) angeordnet sind, und daß die Kopplungsanordnung (141, 142; 231, 232, 242; 332; 432, 442; 542) Mittel zur Überbrückung der Höhenversetzung zu der gemeinsamen Anschlußebene (150; 250; 350; 450; 550) enthält.

20. Beschleunigungssensor nach Anspruch 17 oder 18, **dadurch gekennzeichnet, daß** die Kopplungsanordnung (141, 142; 231, 232, 242; 332; 432, 442; 542) eine die Höhenversetzung zu der gemeinsamen Anschlußebene (150; 250; 350; 450; 550) überbrückende galvanische oder kapazitive Verbindung bildet.

21. Beschleunigungssensor nach einem der Ansprüche 17 bis 20, **dadurch gekennzeichnet, daß** die Rahmenanordnung (110; 210; 310) ein die Sensormasse (101, 102, 103; 201; 301; 401; 501) seitlich umgebendes Mittelteil (111; 211; 311) und ein höhenversetzt zu der Sensormasse (101, 102, 103; 201; 301; 401; 501) an dem Mittelteil (111; 211; 311) angeordnetes erstes Deckelteil (112; 212; 312; 412; 512) enthält, wobei die zweiten Kondensatorelektroden (125, 126; 225, 226; 325, 326; 425, 426, 427, 428; 525, 526, 527, 528) auf der der Sensormasse (101, 102, 103; 201; 301; 401; 501) zugewandten Seite an dem ersten Deckelteil (112; 212; 312; 412; 512) vorgesehen sind und die ersten Kondensatorelektroden (121; 122; 221, 222; 321, 322) den zweiten Kondensatorelektroden (125, 126; 225, 226; 325, 326; 425, 426, 427, 428; 525, 526, 527, 528) gegenüberliegend an der Sensormasse (101, 102, 103; 201; 301; 401; 501) vorgesehen sind.

22. Beschleunigungssensor nach Anspruch 21, **dadurch gekennzeichnet, daß** die gemeinsame Anschlußebene (150; 250; 350; 450; 550), in welcher die ersten Anschlußelemente (142; 242; 442; 542) und die zweiten Anschlußelemente (145, 146; 245, 246; 445, 446, 447, 448; 545, 546, 547, 548) angeordnet sind, durch die der Sensormasse (101, 102, 103; 201; 301; 401; 501) zugewandten Seite des ersten Deckelteils (112; 212; 312; 412; 512) gebildet ist, in welcher auch die zweiten Kondensatorelektroden (125, 126; 225, 226; 325, 326; 425, 426, 427, 428; 525, 526, 527, 528) vorgesehen sind.

23. Beschleunigungssensor nach Anspruch 22, **dadurch gekennzeichnet, daß** die ersten Anschlußelemente (142; 242; 442; 542), die zweiten Anschlußelemente (145, 146; 245, 246; 445, 446, 447, 448; 545, 546, 547, 548) sowie die zweiten Kondensatorelektroden (125, 126; 225, 226; 325, 326; 425, 426, 427, 428; 525, 526, 527, 528), die mit letzteren verbunden sind, aus einer einzigen auf der der Sensormasse (101, 102, 103; 201; 301; 401; 501) zugewandten Seite des ersten Deckelteils (112; 212; 312; 412; 512) ausgebildeten leitenden Schicht hergestellt sind.

24. Beschleunigungssensor nach Anspruch 23, **dadurch gekennzeichnet, daß** auf der der Sensormasse (201) zugewandten Seite des ersten Deckelteils (212) eine zweite Kopplungselektrode (232) ausgebildet ist, und daß an der Sensormasse (201) eine der zweiten Kopplungselektrode (232) gegenüberliegende erste Kopplungselektrode (231) vorgesehen ist, wobei die erste und die zweite Kopplungselektrode (231, 232) eine kapazitive Verbindung der Kopplungsanordnung (231, 232, 242) zur Kopplung der an der Sensormasse (201) vorgesehenen ersten Kondensatorelektroden (221, 222) mit einem an der Rahmenanordnung (210) vorgesehenen ersten Anschlußelement (242; 442) bilden.

25. Beschleunigungssensor nach Anspruch 24, **dadurch gekennzeichnet, daß** die zweite Kopplungselektrode (232; 432) zusammen mit dem ersten Anschlußelement (242; 442) in der gemeinsamen Anschlußebene (250; 450) vorgesehen sind, welche durch die der Sensormasse (201; 401) zugewandte Seite des ersten Deckelteils (212; 412) gebildet ist.

26. Beschleunigungssensor nach Anspruch 25, **dadurch gekennzeichnet, daß** die zweite Kopplungselektrode (232; 432) und das damit verbundene erste Anschlußelement (242; 442) zusammen mit den zweiten Kondensatorelektroden (225, 226; 425, 426, 427, 428) und den damit verbundenen zweiten Anschlußelementen (245, 246; 445, 446, 447, 448) aus einer einzigen auf der der Sensormasse (201; 401) zugewandten Seite des ersten Deckelteils (212) ausgebildeten leitenden Schicht hergestellt sind.

27. Beschleunigungssensor nach einem der Ansprüche 21 bis 26, **dadurch gekennzeichnet, daß** ein höhenversetzt zu der Sensormasse (101,102,103; 201; 301; 401; 501) an dem Mittelteil (111; 211; 311) dem ersten Deckelteil (112; 212; 312; 412; 512) gegenüberliegend angeordnetes zweites Deckelteil (113; 213; 313) vorgesehen ist, welches zusammen mit dem Mittelteil (111; 211; 311) und dem ersten Deckelteil (112; 212; 312; 412; 512) ein die Sensormasse (101, 102, 103; 201; 301; 401; 501) zusammen mit den ersten Kondensatorelektroden (121, 122; 221, 222; 321, 322) und den zweiten Kondensatorelektroden (125, 126; 225, 226; 325, 326; 425, 426, 427, 428; 525, 526, 527, 528) hermetisch einschließendes Gehäuse bildet.

28. Beschleunigungssensor nach einem der Ansprüche 17 bis 27, **dadurch gekennzeichnet, daß** die Lagervorrichtung (105, 106, 107) durch Torsionselemente gebildet ist, an welchen die Sensormasse (101, 102, 103) bezüglich der Rahmenanordnung (110) um die besagte Ausgangslage drehelastisch gelagert ist.

29. Beschleunigungssensor nach Anspruch 28, **dadurch gekennzeichnet, daß** zwei auf einer gemeinsamen Drehachse befindliche, an einander gegenüberliegenden Seiten der Sensormasse (101, 102, 103) angreifende, die Lagervorrichtung (105, 106, 107) bildende Torsionselemente vorgesehen sind, wobei die Sensormasse (101, 102, 103) nur bezüglich einer einzigen Richtung (x, y, z) relativ zu der Rahmenanordnung (110) beweglich ist.

30. Beschleunigungssensor nach Anspruch 28 oder 29, **dadurch gekennzeichnet, daß** die Torsionselemente (105, 106, 107) an der Sensormasse (101, 102, 103) einerseits und an dem Mittelteil (111) der Rahmenanordnung (110) andererseits festgelegt sind.

31. Beschleunigungssensor nach Anspruch 28, 29 oder 30 in Verbindung mit Anspruch 19, **dadurch gekennzeichnet, daß** die Kopplungsanordnung (141, 142) durch eine galvanische Verbindung gebildet ist, welche die Torsionselemente (105, 106, 107) enthält.

32. Beschleunigungssensor nach einem der Ansprüche 17 bis 27, **dadurch gekennzeichnet, daß** die Lagervorrichtung (205; 305; 405; 505) durch ein oder mehrere Biegeelemente gebildet ist, an welchen die Sensormasse (201; 301; 401; 501) bezüglich der Rahmenanordnung (210; 310) um die besagte Ausgangslage biegeelastisch gelagert ist.

33. Beschleunigungssensor nach Anspruch 32, **dadurch gekennzeichnet, daß** zwei in einer gemeinsamen Ebene befindliche, voneinander beabstandet an der Sensormasse (201; 301) festgelegte Biegeelemente (205; 305) vorgesehen sind, wobei die Sensormasse (201; 301) nur bezüglich einer einzigen Richtung (x) relativ zu der Rahmenanordnung (210; 310) beweglich ist.

34. Beschleunigungssensor nach Anspruch 32 oder 33, **dadurch gekennzeichnet, daß** die Biegeelemente (205; 305) an der Sensormasse (201; 301) einerseits und an dem ersten Deckelteil (212; 312) der Rahmenanordnung (210; 310) andererseits festgelegt sind.

35. Beschleunigungssensor nach Anspruch 32, 33 oder 34 in Verbindung mit Anspruch 19, **dadurch gekennzeichnet, daß** die Kopplungsanordnung (231, 232, 242; 332) durch eine galvanische Verbindung gebildet ist, welche die Biegeelemente (205; 305) enthält.

36. Beschleunigungssensor nach Anspruch 32, **dadurch gekennzeichnet, daß** ein einziges Biegeelement (405; 505) vorgesehen ist, welches zentral an der Sensormasse (401; 501) festgelegt ist, wobei die Sensormasse (401; 501) bezüglich zweier verschiedener Richtungen (x, y) relativ zu der Rahmenanordnung beweglich ist, und daß die Erfassungseinrichtung (420; 520) zur Erzeugung zweier die Lage der Sensormasse (401; 501) relativ zu der Rahmenanordnung repräsentierender kapazitiver Ausgangssignale vorgesehen ist.

37. Beschleunigungssensor nach Anspruch 36, **dadurch gekennzeichnet, daß** die Erfassungseinrichtung (420; 520) vier erste Kondensatorelektroden, welche paarweise einander gegenüberliegend auf entgegengesetzten Seiten des Biegeelements (405; 505) an der Sensormasse (401; 501) vorgesehen sind, und vier zweite Kondensatorelektroden (425, 426, 427, 428; 525, 526, 527, 528), welche paarweise einander gegenüberliegend auf entgegengesetzten Seiten des Biegeelements (405; 505) gegenüber den ersten Kondensatorelektroden an dem ersten Deckelteil (412; 512) der Rahmenanordnung vorgesehen sind, umfaßt.

38. Beschleunigungssensor nach Anspruch 36 oder 37 in Verbindung mit Anspruch 4, **dadurch gekennzeichnet, daß** die Kopplungsanordnung (432, 442) eine das Biegeelement (405) umgebende erste Kopplungselektrode, welche an der Sensormasse (401) vorgesehen ist, und ein das Biegeelement (405) umgebende, der ersten Kopplungselektrode gegenüberliegende zweite Kopplungselektrode (432) umfaßt, welche an dem ersten Deckelteil (412) der Rahmenanordnung vorgesehen ist.

39. Beschleunigungssensor nach Anspruch 36 oder 37 in Verbindung mit Anspruch 19, **dadurch gekennzeichnet, daß** die Kopplungsanordnung (542) durch eine galvanische Verbindung gebildet ist, welche das Biegeelement (505) umfaßt.

40. Beschleunigungssensor nach einem der Ansprüche 17 bis 39, **dadurch gekennzeichnet, daß** zur Erfassung der Beschleunigung eines Objekts in mehreren Richtungen (x, y, z) mehrere mit jeweils einer kapazitiven Erfassungseinrichtung versehene Sensormassen (101, 102, 103) vorgesehen sind, die unabhängig voneinander jeweils mittels einer Lagervorrichtung (105, 106, 107) in einer Rahmenanordnung gelagert und jeweils mit einer kapazitiven Erfassungseinrichtung zur Erzeugung eines die Lage der jeweiligen Sensormasse (101,102,103) relativ zu der Rahmenanordnung repräsentierenden Ausgangssignals versehen sind.

41. Beschleunigungssensor nach Anspruch 40, **dadurch gekennzeichnet, daß** die Sensormassen (101, 102, 103) in einer gemeinsamen Ebene in der Rahmenanordnung gelagert sind und daß die ersten und zweiten Anschlußelemente aller Sensormassen (101, 102,103) in einer gemeinsamen Anschlußebene vorgesehen sind.

42. Beschleunigungssensor nach einem der Ansprüche 17 bis 41, **dadurch gekennzeichnet, daß** eine Sensormasse (101,102; 201; 301; 401; 501) zur Erfassung der Beschleunigung des Objekts in einer horizontalen Richtung (x, y) vorgesehen ist, welche eine in der Höhe nach oben gegenüber dem Massenschwerpunkt (Mx, My) versetzte Lager-vorrichtung (105, 106; 205; 205; 405; 505) aufweist, wobei die Sensormasse (101, 102; 201; 301) bei Beschleunigung des Objekts eine Drehbewegung um eine durch die Lagervorrichtung (107) definierte Drehachse (Ax, Ay) ausführt.

43. Beschleunigungssensor nach einem der Ansprüche 17 bis 42, **dadurch gekennzeichnet, daß** eine Sensormasse (103) durch Erfassung der Beschleunigung des Objekts in einer vertikalen Richtung (z) vorgesehen ist, welche eine seitlich zum Massenschwerpunkt (Mz) versetzte Lagervorrichtung (107) aufweist, wobei die Sensormasse (103) bei Beschleunigung des Objekts eine Drehbewegung um eine durch die Lagervorrichtung (107) definierte Drehachse (Az) ausführt.

44. Beschleunigungssensor nach Anspruch 42 oder 43, **dadurch gekennzeichnet, daß** die ersten Kondensatorelektroden (121, 122; 221, 222; 321, 322) paarweise jeweils auf entgegengesetzten Seiten der durch die Lagervorrichtung (105, 106, 107; 205; 305; 405; 505) definierten Drehachse (Ax, Ay, Az) auf der Sensormasse (101, 102, 103; 201; 301; 401; 501) vorgesehen sind, und daß die zweiten Kondensatorelektroden (125, 126; 225, 226; 325, 326; 425, 426, 427, 428; 525, 526, 527, 528) ebenfalls paarweise jeweils den ersten Kondensatorelektroden (121, 122; 221, 222; 321, 322) gegenüberliegend an der Rahmenanordnung (110; 210; 310) vorgesehen sind, und daß zur Erzeugung des kapazitiven Ausgangssignals der Erfassungseinrichtung (120; 220; 320; 420; 520) die Differenzkapazität der paarweisen Kondensatorelektroden verwendet wird.

45. Beschleunigungssensor nach einem der Ansprüche 17 bis 44, **dadurch gekennzeichnet, daß** die auf der Sensormasse (101, 102, 103; 201; 301; 401; 501) vorgesehenen ersten Kondensatorelektroden (121, 122; 221, 222; 321, 322) durch ein leitfähiges Material gebildet sind, aus welchem die Sensormasse (101, 102, 103; 201; 301; 401; 501) hergestellt ist.

46. Beschleunigungssensor nach einem der Ansprüche 21 bis 45, **dadurch gekennzeichnet, daß** das erste Deckelteil (112; 212; 312; 412; 512) der Rahmenanordnung (110; 210; 310) aus einem alkalimetallhaltigen Glas hergestellt ist.

47. Beschleunigungssensor nach einem der Ansprüche 27 bis 46, **dadurch gekennzeichnet, daß** das zweite Deckelteil (113; 213; 313) der Rahmenanordnung (110; 210; 310) aus einem alkalimetallhaltigen Glas hergestellt ist.

48. Verfahren zur Herstellung eines Beschleunigungssensors nach einem der Ansprüche 40 bis 47, **dadurch gekennzeichnet, daß** jede der Sensormassen (101, 102, 103) zunächst mit einer eigenen Rahmenanordnung als Einzelsensor angefertigt wird und daß die Einzelsensoren dann zu einem Gesamtsensor zusammengefügt werden.
